# DEMANDE DE BREVET EUROPEEN

(11) **EP 1 041 833 A1**
(43) Date de publication de la demande: **04.10.2000**
(21) Numéro de dépôt: 00400210.1
(22) Date de dépôt: 27.01.2000
(51) Int. Cl.: H04Q 7/32, H04Q 7/38

(54) **Procédé de transmission de signaux de commande entre deux systèmes de télécommunication**

(30) Priorité: 31.03.1999 FR 9904061
(71) Demandeur: ALCATEL, 75008 Paris (FR)
(72) Inventeur: Bennab, Pascal, 95540 Mery sur Oise (FR); Brandon, Alexandre, 92250 La Garenne-colombes (FR)
(74) Mandataire: Croonenbroek, Thomas Jakob

(57) **Abrégé**

L'invention concerne un procédé de transmission de signaux de commande entre un premier système de télécommunication de type réseau GSM et un second système de télécommunication, par exemple de type système DECT.

Des signaux numériques reçus via le réseau GSM sont reçus par une première unité radio (4) d'un combiné multi-modes (1), puis sont transmis via une liaison radio (12) du système de radiocommunication de type DECT vers une base résidentielle (10) où des signaux de commande sont extraits et interprétés pour activer des accessoires de la base résidentielle (10).

## Description

La présente invention se rapporte à un procédé de transmission de signaux de commande entre deux systèmes de télécommunication.

Plus particulièrement, l'invention concerne un procédé de transmission de signaux de commande entre deux systèmes de télécommunication faisant notamment intervenir un combiné mobile multi-modes permettant de transférer des signaux de commande d'un système de télécommunication à l'autre.

Les systèmes de télécommunication mis en jeu par la présente invention sont de préférence un réseau de radiotéléphonie cellulaire de type GSM ("Global System for Mobile Communication Standard", dans la littérature anglaise) et un système de radiocommunication personnelle obéissant à la norme DECT ("Digital European Cordless Communications", dans la littérature anglaise). L'utilisation d'une autre norme est cependant également possible.

Un système de télécommunication utilisant la norme DECT appartient aux techniques numériques de communications dites bi-directionnelles.

Un système de communication de type DECT est un système numérique de radiocommunication personnelle qui propose de nombreuses applications. Comme tous les systèmes de radiocommunication personnelle, le système DECT se compose de deux entités communicantes : un combiné mobile (ou terminal de radiocommunication) et une borne fixe (ou base résidentielle téléphonique), à laquelle aboutissent un ou plusieurs raccordements filaires. On désigne généralement par le terme base une borne à raccordement filaire unique conçue pour permettre l'accès sans fil au réseau d'un abonné téléphonique.

D'un point de vue ingénierie radioélectrique, on peut distinguer :
- la zone de couverture d'une borne fixe, c'est-à-dire l'aire dans laquelle un combiné mobile peut établir une communication par l'intermédiaire de cette borne avec une qualité de service acceptable. Cette zone de couverture d'une borne peut être appelée cellule ;
- la ressource spectrale, qui est la bande de fréquence allouée au système.

D'un point de vue fonctionnel, on peut distinguer :
- les appels sortants, qui sont passés par le combiné mobile ;
- les appels entrants, qui sont reçus par le combiné mobile. Dans le cas d'appels entrants, le réseau doit connaître la borne sous laquelle l'abonné est joignable. L'abonné doit donc être localisé auprès du réseau sans fil.

Les domaines d'application habituels des systèmes de radiocommunication personnelle de type DECT sont : la base domestique, le télépoint, l'autocommutateur téléphonique privé sans fil (ou PBX sans fil), le réseau local radio, la distribution d'abonnés par voie radio et la radio messagerie.

Dans le cadre de l'invention, le domaine d'application privilégié est celui de la base domestique : c'est le domaine d'application où l'usager dispose à son domicile d'une base résidentielle téléphonique privée et d'un combiné mobile. La zone de couverture de la base est approximativement la surface de son appartement ou de sa maison et de son jardin.

Conceptuellement, le système DECT se divise en trois parties :
- la partie fixe radio (RFP) ou base, qui couvre une cellule de taille relativement réduite (de 25 à 100 mètres de rayon) et qui gère les liens radio établis avec les combinés mobiles présents dans cette zone ;
- le système central chargé de gérer un ensemble de cellules ;
- les unités d'interfonctionnement qui permettent d'accéder au réseau sur lequel le système DECT se greffe (exemple de réseau : RTCP, RNIS, GSM, etc.).

L'interface radio DECT permet d'accéder à une grande variété de réseaux existants.

L'invention peut se situer dans le cadre de travaux effectués sur des profils d'interfonctionnement entre des réseaux de type DECT et des réseaux tels que le réseau GSM.

Il existe désormais des combinés portables dits combinés bi-modes. Ces combinés comportent deux systèmes radio. Par exemple, on trouve les combinés DECT/GSM qui comportent :
- un premier système radio réservé pour converser au moyen du réseau GSM ;
- un second système radio pour converser avec le système DECT via la base DECT.

Ainsi, dans le cadre d'une base domestique, l'usager peut être joint sur un unique combiné mobile via un réseau GSM ou un réseau DECT. Il n'est ainsi pas contraint de se déplacer chez lui avec deux combinés mobiles différents.

Cependant, ce type de portable bi-modes présente encore un certain nombre d'inconvénients pratiques. Par exemple, lorsqu'un appel téléphonique arrive via le système de communication de type DECT, la base domestique DECT a une sonnerie suffisamment puissante pour être entendue d'un point quelconque de la maison de l'usager. Par contre, lorsqu'un appel téléphonique arrive via un réseau GSM, seule la sonnerie du combiné mobile est activée. Or, cette sonnerie n'est pas très puissante, et si l'usager ne se trouve pas à une distance réduite du combiné portable, il n'entendra pas la sonnerie.

Un des objets de l'invention est de pallier ce type d'inconvénient. Le procédé selon l'invention met notamment en place des moyens pour faire sonner la base DECT lors de l'arrivée d'un appel GSM.

D'une façon plus générale, l'objet de l'invention est de proposer des moyens pour transmettre, entre un premier système de télécommunication, par exemple de type réseau GSM, et un deuxième système de télécommunication, par exemple de type DECT, des signaux de commande pour activer des accessoires du deuxième système de télécommunication.

Pour atteindre cet objectif, l'invention propose de développer les capacités d'une liaison radio qui existe entre une base domestique, par exemple de type DECT et un combiné portable multi-modes. Différents signaux de commande pourront être véhiculés selon l'invention par cette liaison radio et être décodés et exploités par la base domestique.

Plusieurs applications pratiques pourront être envisagées grâce aux moyens mis en oeuvre par l'invention.

L'invention concerne donc un procédé de transmission de signaux de commande entre un premier système de télécommunication de type radiotéléphonie cellulaire et un second système de télécommunication, comprenant les étapes consistant à :
- recevoir depuis le premier système de télécommunication, au moyen d'un combiné mobile multi-modes pouvant communiquer avec au moins le premier système de télécommunication et le second système de télécommunication, un ensemble de signaux numériques,
caractérisé en ce que le procédé selon l'invention comporte les étapes supplémentaires consistant à :
- transmettre, au moyen d'un canal de transmission, vers une unité réceptrice du second système de télécommunication et depuis le combiné mobile multi-modes les signaux numériques reçus,
- dans l'unité réceptrice du second système de télécommunication, extraire de l'ensemble des signaux numériques transmis des signaux de commande,
- interpréter les signaux de commande,
- exécuter les signaux de commande.

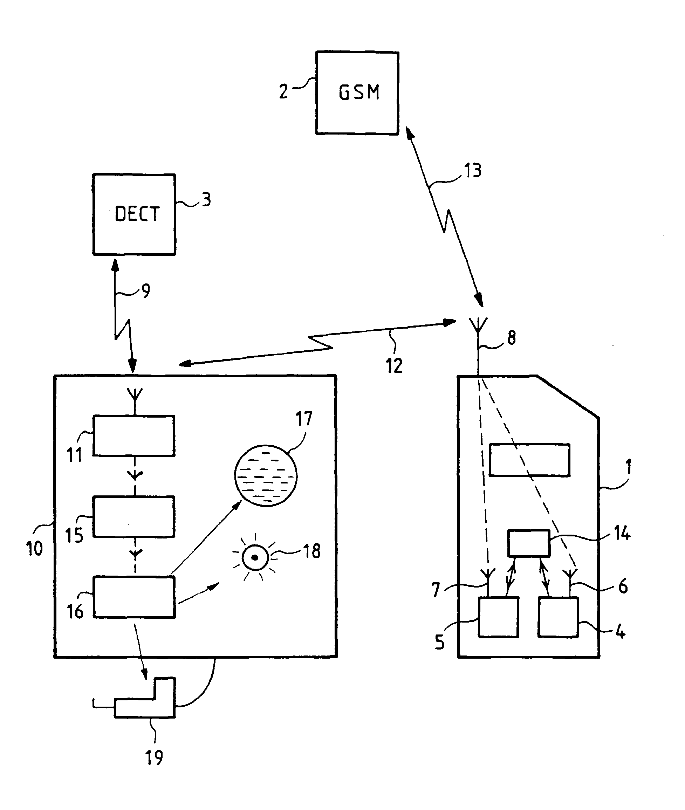

Les différents aspects et avantages de l'invention apparaîtront plus clairement dans la suite de la description en référence à la figure unique, qui n'est donnée qu'à titre indicatif et nullement limitatif de l'invention. Ainsi, une autre norme que la norme DECT peut être choisie pour le second système de télécommunication.

D'autre part, le combiné mobile utilisé peut, d'une façon générale, être un combiné mobile multimodes. Le procédé selon l'invention ne devra donc pas être limité à l'utilisation d'un combiné bimodes.

L'unique figure montre un système de communication susceptible de mettre en place le procédé selon l'invention. Sur cette figure, un combiné mobile bi-modes 1 est représenté. Le combiné bi-modes 1 peut communiquer avec un premier système de télécommunication, par exemple un réseau GSM, et un second système de télécommunication, par exemple un système de type DECT.

Le combiné bi-modes 1 comprend donc un premier module radio 4 dédié au premier système de télécommunication et un second module radio 5 dédié au second système de télécommunication. Le plus souvent, chacun des modules radio est équipé notamment d'une antenne (6,7) qui aboutit à une antenne externe 8 du combiné mobile.

Lorsqu'un appel téléphonique est reçu au moyen du système de télécommunication de type DECT, un système central 3 du système de type DECT établit une liaison 9 avec une base résidentielle téléphonique 10. La base résidentielle téléphonique 10 est donc une unité réceptrice du second système de télécommunication. La liaison 9 entre le système central 3 et la base résidentielle téléphonique 10 comprend au moins des moyens de connexion filaire. Une unité radio il de la base résidentielle téléphonique 10 établit alors une liaison radio 12 avec le second module radio 5 du combiné mobile 1. Dans le cas où un appel est passé depuis le combiné mobile 1 via le système de télécommunication de type DECT, les liaisons physiques mises en jeu sont les mêmes que dans le cas de la réception d'un appel, leur ordre d'intervention étant inversé.

Dans le cas de la réception ou de l'émission d'un appel via le système de télécommunication utilisant le réseau GSM, une liaison radio 13 est directement établie entre le premier module radio 4 du combiné mobile 1 et une cellule du réseau GSM 2. Dans tous les cas, les signaux qui sont reçus ou émis par le combiné mobile 1 sont des signaux numériques.

Le combiné mobile 1 comporte un module de traitement du signal 14 qui peut être commun au premier module radio 4 et au second module radio 5 du combiné mobile 1. Le module de traitement du signal 14 permet ainsi de traiter les différents signaux numériques reçus par un des deux modules radio du combiné mobile 1.

La liaison radio 12 qui existe entre le second module radio 5 du combiné mobile 1 et l'unité radio 11 de la base résidentielle 10 est utilisée selon l'invention pour signaler à la base résidentielle 10 l'arrivée d'un appel via le réseau GSM. A chaque appel entrant via le réseau GSM, le module de traitement du signal 14 génère un signal de commande qui est transmis au second module radio 5, et qui est ensuite transmis via la liaison radio 12 à l'unité radio 11 de la base résidentielle 10.

Selon l'invention, la base résidentielle 10 comprend des moyens d'extraction 15 du signal de commande, émis par le second module radio 5, parmi l'ensemble des signaux numériques qui peuvent être simultanément transmis (signaux de début de communication, de fin de communication...).

Une unité logique 16 de la base résidentielle 10 permet une interprétation des signaux de commande reçus et assure leur exécution en déclenchant, dans cet exemple, une sonnerie 17 de la base résidentielle 10.

Ainsi, quand un appel arrive via le réseau GSM, la sonnerie du combiné mobile 1 et la sonnerie 17 de la base résidentielle 10 sont déclenchées. Le déclenchement des deux sonneries peut être simultané ou légèrement différé.

Dans un mode de réalisation particulier de l'invention, des sonneries différentes peuvent être activées dans la base résidentielle 10 selon que l'appel entrant est reçu par le réseau GSM ou par le système de télécommunication de type DECT.

D'une façon plus générale, la liaison radio 12 qui assure la transmission de signaux numériques entre le second module radio 5 du combiné mobile et l'unité radio de la base résidentielle 10, est utilisée, selon l'invention, pour envoyer des signaux de commande à la base résidentielle 10. Les moyens d'extraction 15 et l'unité logique 16 assurent alors l'activation d'accessoires rattachés à la base résidentielle 10.

Les accessoires ainsi activés peuvent être la sonnerie 17, où encore une lumière clignotante 18 qui se déclenche lorsque le niveau de la batterie du combiné mobile 1 est faible ; dans ce cas, un signal de commande est automatiquement émis depuis le module de traitement du signal 14 lorsque le niveau de la batterie passe sous un seuil de charge prédéterminé. Le signal de commande suit les différentes étapes de traitement précédemment décrites.

Une autre application du procédé selon l'invention est la réception de fax sur la base résidentielle 10 via le réseau GSM : l'accessoire commandé par l'unité logique 16 est alors un appareil de réception de facsimile 19. Les différentes étapes de la transmission des signaux sont dans ce cas analogues aux étapes précédemment décrites et qui aboutissaient au déclenchement de la sonnerie 17. Les informations caractéristiques du message faxé sont alors traitées comme des signaux de commande.

Le procédé selon l'invention est avantageux dans la mesure où il exploite une liaison radio qui est déjà présente dans un combiné mobile multi-modes.

## Revendications

1. Procédé de transmission de signaux de commande entre un premier système de télécommunication (2,4,6,13) de type radiotéléphone cellulaire et un second système (3,5,7,9,10,12) de télécommunication, comprenant les étapes consistant à :
- recevoir depuis le premier système de télécommunication, au moyen d'un combiné mobile multi-modes (1) pouvant communiquer avec au moins le premier système de télécommunication et le second système de télécommunication, un ensemble de signaux numériques,
caractérisé en ce que le procédé selon l'invention comporte les étapes supplémentaires consistant à :
- transmettre, au moyen d'un canal de transmission (12), vers une unité réceptrice (10) du second système de télécommunication et depuis le combiné mobile multi-modes (1) les signaux numériques reçus,
- dans l'unité réceptrice (10) du second système de télécommunication, extraire (15) de l'ensemble des signaux numériques transmis des signaux de commande,
- interpréter (16) les signaux de commande,
- exécuter les signaux de commande.

2. Procédé selon la revendication 1, caractérisé en ce que le second système de télécommunication obéit à la norme DECT.

3. Procédé selon l'une des revendications précédentes, caractérisé en ce que l'unité réceptrice (10) est une base résidentielle téléphonique du second système de télécommunication.

4. Procédé selon l'une des revendications précédentes, caractérisé en ce que le canal de transmission (12) utilisé pour transmettre les signaux numériques entre l'unité réceptrice (10) et le combiné mobile multi-modes (1) est une liaison radio du second système de télécommunication.

5. Procédé selon l'une des revendications précédentes, caractérisé en ce que l'exécution des signaux de commande comprend l'activation d'accessoires attachés à l'unité réceptrice (10).

6. Procédé selon l'une des revendications précédentes, caractérisé en ce que l'accessoire activé est une sonnerie (17).

7. Procédé selon la revendication 6, caractérisé en ce que la sonnerie activée est différente d'une sonnerie activée suite à un appel entrant reçu par le premier système de télécommunication.

8. Procédé selon l'une des revendications 1 à 5, caractérisé en ce que l'accessoire activé est une lumière clignotante (18).

9. Procédé selon l'une des revendications 1 à 5, caractérisé en ce que l'accessoire activé est un appareil de réception de facsimile (19).
